# EUROPÄISCHE PATENTSCHRIFT

(11) **EP 0 559 652 B1**
(45) Veröffentlichungstag und Bekanntmachung des Hinweises auf die Patenterteilung: **17.11.1994**
(21) Anmeldenummer: 91916063.0
(22) Anmeldetag: 17.09.1991
(51) Int. Cl.: F16H 63/38, G05G 5/06

(54) **KUGELRASTE FÜR DIE SICHERUNG VON VERSTELLPOSITIONEN EINES STELLELEMENTES, INSBESONDERE EINES SCHALTGESTÄNGES FÜR KRAFTFAHRZEUGE**
BALL STOP FOR MAINTAINING A CONTROL COMPONENT IN POSITION, ESPECIALLY A SHIFT LINKAGE FOR MOTOR VEHICLES
ARRET A BILLE POUR LE MAINTIEN D'UN ELEMENT DE COMMANDE EN POSITION, NOTAMMENT DE LA TIMONERIE DE CHANGEMENT DE VITESSE DE VEHICULES A MOTEUR

(30) Priorität: 03.12.1990 DE 4038494
(43) Veröffentlichungstag der Anmeldung: 15.09.1993
(73) Patentinhaber: INA Wälzlager Schaeffler KG, 91074 Herzogenaurach (DE)
(72) Erfinder: RADINGER, Norbert, D-8500 Nürnberg (DE)
(86) Internationale Anmeldenummer: EP9101765
(87) Internationale Veröffentlichungsnummer: WO9209834

(56) Entgegenhaltungen:
- EP-A- 0 339 441
- DE-C- 3 808 375

## Beschreibung

Die Erfindung betrifft eine Kugelraste für die Sicherung von Verstellpositionen eines axial und/oder schwenkend bewegbaren Stellelementes, insbesondere eines Gestänges für Schaltgetriebe von Kraftfahrzeugen, mit einem Gehäuse, einem in diesem axial verschiebaren, tiefgezogenen Führungsteil, welchem eine Kugelschale zur Führung der Rastkugel zugeordnet ist, einer Feder, die sich am Gehäuse abstützt und das Führungsteil im Ausschiebesinne beaufschlagt und mit zwischen dem Führungsteil und dem Gehäuse beweglich angeordneten und in einem Käfig geführten Wälzkörpern.

Eine derartige Kugelraste ist beispielsweise aus der EP-A-0 339 441 bekannt. Dabei ist das Gehäuse massiv ausgebildet. In dieses ist ein Führungsteil eingesetzt, welches ursprünglich geteilt hergestellt wurde. Es besteht aus einem Führungsschaft und der Kugelschale zur Führung der Rastkugeln. Beide Teile sind durch Schweißen miteinander verbunden. Die am nach Montage einsetzbaren Boden des Gehäuses abgestützte Ausschiebefeder beaufschlagt das Führungsteil in Richtung eines am Gehäuse angebrachten Anschlages. Zwischen Führungsteil und Innenwand der Bohrung des Gehäuses ist ein Käfig mit Wälzkörpern angeordnet, um die Reibung zu vermindern. Zur Sicherung der Rastkugel in der Kugelschale ist ein Sprengring vorhanden.

Aus der DE-C-38 08 375 ist eine Kugelraste bekannt, bei der das Gehäuse geteilt ausgebildet ist und aus einem ersten inneren Teil besteht, welches als Tiefziehteil gestaltet ist, das von einer Hohlschraube umgeben ist. Das Führungsteil ist massiv gestaltet und umfaßt einstückig die Kugelschale. Zwischen Führungsteil und Gehäuse ist ebenfalls ein Käfig mit Wälzkörpern angeordnet. Zur Sicherung des Führungsteils im Gehäuse ist das Gehäuse mit einem nach innen umgebördelten Rand versehen.

Beiden vorgenannten Ausführungsformen ist gemeinsam, daß der Käfig mit den Wälzkörpern hinsichtlich seiner Relativbewegung gegenüber Führungsteil und Gehäuse nicht begrenzt ist. Da das Führungsteil erheblich kürzer als die Führungslänge im Gehäuse ausgebildet ist, besteht die Gefahr, insbesondere beim Auftreten von Erschütterungen, daß der Käfig mit den Wälzkörpern die Führungsfläche des Führungsteils verläßt. Ein weiterer Nachteil besteht darin, daß je nach Ausbildung jeweils Teile vorgesehen sind, die mechanisch zu bearbeiten sind.

Von Nachteil ist ferner, daß bei beiden Ausführungsformen zusätzliche Sicherungsmittel für die Sicherung der Rastkugel in der Kugelschale vorzusehen sind.

Der Erfindung liegt die Aufgabe zugrunde, eine Kugelraste zu schaffen, die einfach herstellbar ist und welche gewährleistet, daß die Kugelschale keiner besonderen Fixierung hinsichtlich der Halterung der Rastkugel bedarf.

Diese Aufgabe wird erfindungsgemäß dadurch gelöst, daß das Führungsteil als Blechhülse gestaltet ist, welche an ihrem die Rastkugel aufnehmenden Ende mit einem nach innen gerichteten Kragen versehen ist, dessen Öffnungsdurchmesser kleiner als der Durchmesser der Rastkugel ist, daß die Kugelschale in das Führungsteil eingesetzt ist, daß das Gehäuse ein Tiefziehteil ist, das einen Boden aufweist, an dem sich die Ausschiebefeder abstützt und das an seinem Öffnungsende einen nach innen umgebördelten Rand als Anschlag zur Begrenzung der Ausschiebebewegung des Führungsteils dem Gehäuse gegenüber aufweist.

Von Vorteil bei dieser Ausführungsform ist, daß der nach innen weisende Kragen des Führungsteiles sowohl für die Sicherung der Rastkugel als auch der Sicherung der Kugelschale benutzt werden kann. Ein weiterer Vorteil der Anordnung besteht darin, daß die Rastkugel nur in das Führungsteil eingeschoben zu werden braucht. Hierbei ist nicht einmal eine starre Verbindung erforderlich, da aufgrund der Ausschiebefeder die Kugelschale stets in Richtung auf den nach innen weisenden Kragen gedrückt wird. Die Reibung zwischen dem Führungsteil und der Kugelschale wird stets größer sein, als die Reibung zwischen dem Gehäuse und dem Führungsteil, da diese über Wälzkörper einander gegenüber sind.

Aufgrund der Gestaltung ist eine einfache Bauweise durch tiefziehbare Bauteile erreichbar. Zusätzliche Sicherungsmaßnahmen für die Halterung der Bauteile einander gegenüber entfallen.

In weiterer Ausgestaltung der Erfindung ist vorgesehen, daß das Führungsteil an seinem in dem Gehäuse liegenden Ende mit einem nach außen weisenden Kragen zur axialen Abstützung des Käfigs versehen ist.

Der nach außen weisende Kragen kann dazu benutzt werden, den Ausschiebeweg des Führungsteiles in dem Gehäuse zu begrenzen. Die Montage ist dadurch gewährleistet, daß nach dem Einlegen des Führungsteils in das Gehäuse und dem Einfädeln des Käfigs der Rand des Gehäuses nach innen zu einem Anschlag umgebördelt wird.

Der Vorteil der mit dieser Konstruktion verbunden ist, beruht darin, daß stets eine sichere Führung des Käfigs dem Führungsteil und dem Gehäuse gegenüber erfolgt. Der Käfig kann seine Führungsbahn nicht verlassen. Darüberhinaus ist gewährleistet, daß der Käfig jeweils in die Ausgangsbasis zurückgeführt wird, wenn beispielsweise die Rastkugel die entsprechende Rastausnehmung verlassen hat und das Führungsteil in seine äußerste Ausschiebeposition bewegt wird. Es wird also erreicht, daß das Führungsteil über den Kragen am Käfig und über diesen am Anschlag des Gehäuses in der Ausschiebeposition abgestützt ist. Der Käfig wird damit ebenfalls zur Begrenzung der Ausschiebebewegung herangezogen.

Es besteht jedoch auch die Möglichkeit, das Führungsteil abgesetzt zu gestalten und den Absatz zu nutzen, um die Ausschiebeposition zu begrenzen. Der Absatz kommt in der voll ausgeschobenen Position am Anschlag des Gehäuses zur Anlage. Der Käfig ist dann mit geringem Spiel seiner Stirnflächen zu den Anschlägen gehalten, die durch den nach innen weisenden Rand des Gehäuses und den nach außen weisenden Kragen des Führungsteils gebildet werden. Auch hierdurch erfolgt jeweils eine Rückführung des Käfigs mit den Wälzkörpern in die Ausgangsposition. Ein einseitiges Verschieben oder Anlegen des Käfigs, welches dazu führen könnte, daß eine Gleitreibung eintritt, wenn durch Vibrationen eine Verlagerung des Käfigs stattgefunden hat, wird hierdurch wirksam verhindert.

Um ein Verklemmen der Rastkugel zu vermeiden, ist vorgesehen, daß der Innenrand des nach innen weisenden Kragens des Führungsteils der Außenfläche der Rastkugel angepaßt ist.

Bevorzugt ist vorgesehen, daß die Ausschiebefeder sich an der Kugelschale abstützt und diese gegen die Innenfläche des nach innenweisenden Kragens des Führungsteils anliegt. Hierdurch erübrigt sich eine Verbindung zwischen der Kugelschale und dem Führungsteil. Eine wirksame Halterung ist auch dann gegeben, wenn aufgrund der Lage der Toleranzen ein Spiel zwischen der Kugelschale und dem Führungsteil vorhanden ist.

Um die Demontage beispielsweise des in das Getriebegehäuse eingepreßten Gehäuses der Kugelraste zu erleichtern, ist das Gehäuse im Bodenbereich, ausgehend vom zylindrischen Abschnitt zur Bildung eines radial nach außen vorstehenden Anschlagrandes gedoppelt ausgebildet. Der Rand kann genutzt werden, um durch Hintergriff eines Werkzeuges das Ausziehen zu erleichtern.

Zwei bevorzugte Ausführungsbeispiele und die Anwendung bezüglich eines Kraftfahrzeuggetriebes sind in der Zeichnung schematisch dargestellt und anhand derselben näher erläutert.

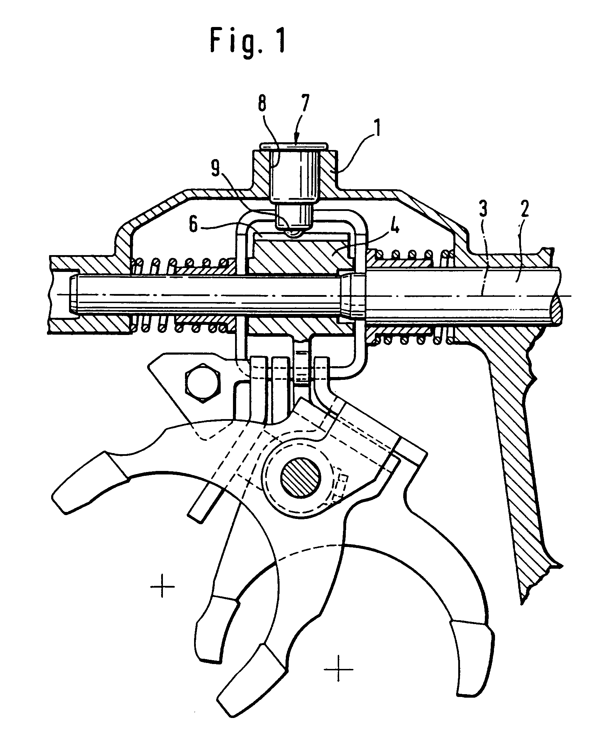

Es zeigt
- Figur 1: den Einbau der Kugelraste in ein Schaltgetriebe,

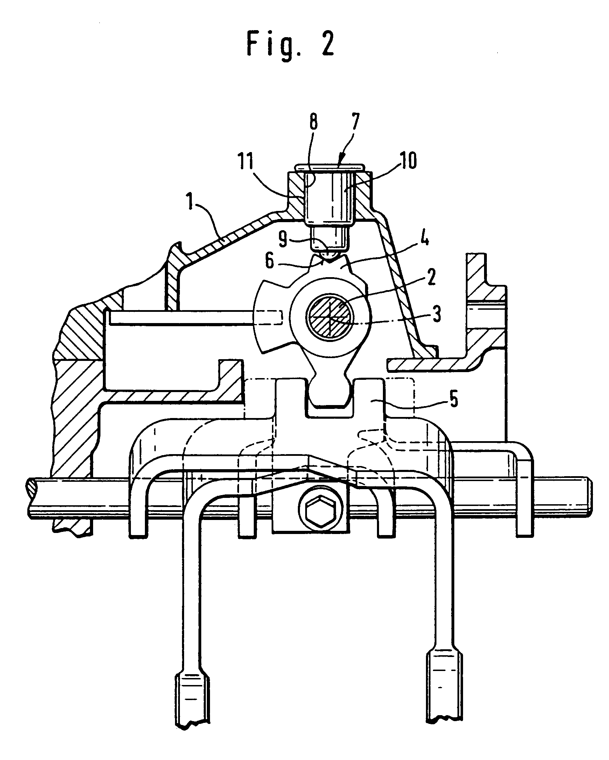

- Figur 2: eine Seitenansicht zu Figur 1 und
- Figur 3: eine erste Ausführungsform der Kugelraste im Halbschnitt und
- Figur 4: eine zweite alternative Ausführungsform der Kugelraste im Längsschnitt.

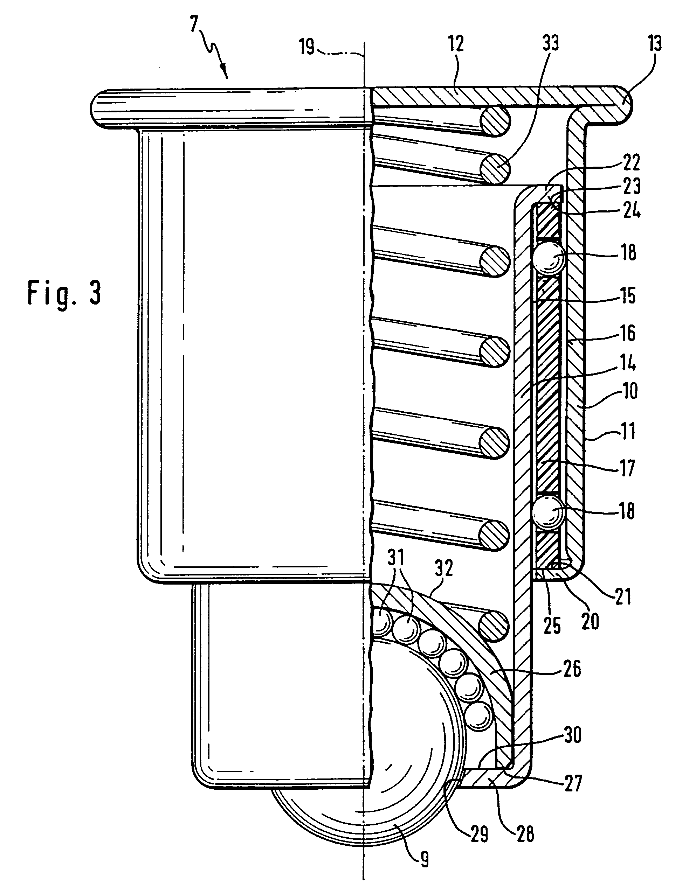

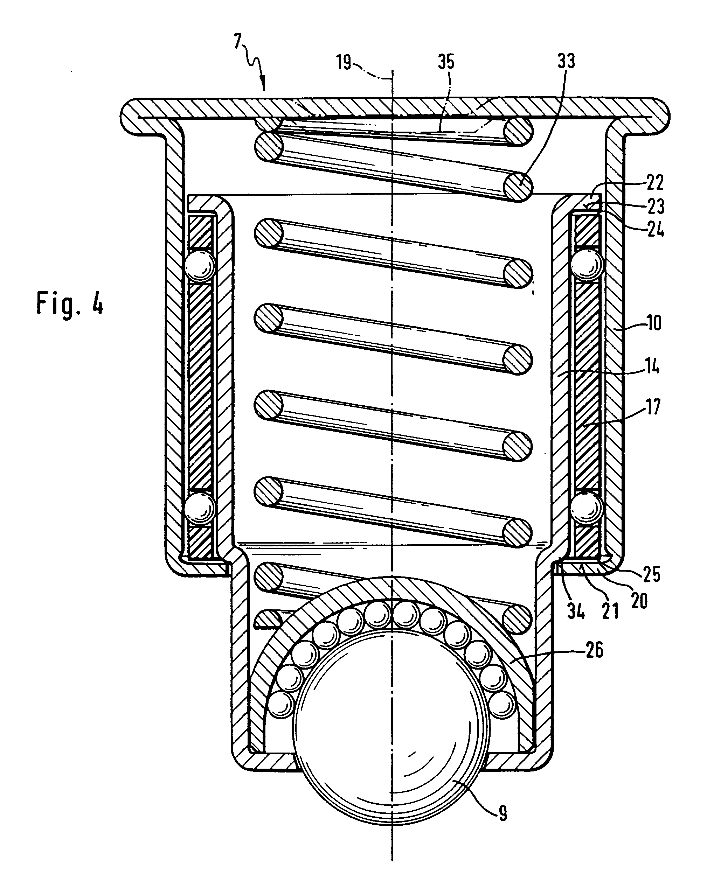

In dem Getriebegehäuse 1 eines Schaltgetriebes ist in Lagern die Schaltstange 2 in Achsrichtung, das heißt, längs der Achse 3 verschieblich und in Umfangsrichtung um die Achse 3 schwenkend bewegbar angeordnet. Die Schaltstange 2 besitzt ein oder mehrere Schaltelemente 4, welche in eine Schaltgabel 5 zur Bewegung derselben eingreifen. Um die einzelnen Stellungen der Schaltstange 2 zu sichern, ist diese oder das Schaltelement mit einer entsprechenden Rastausnehmung 6 versehen. Die Rastkugel 9 der Kugelraste 7 greift in die Rastausnehmung 6 ein. Die Kugelraste 7 ist ortsfest im Getriebegehäuse 1 angeordnet. Hierzu ist sie beispielsweise in eine Bohrung 8 des Getriebegehäuses mit ihrem Gehäuse 10 eingepreßt. Die Rastkugel 9 greift in die Rastausnehmung 6 des Schaltelementes 4 ein, wenn eine übereinstimmende Lage gegeben ist. Bei Bewegung kann die Rastkugel 9 den Sitz in der Rastausnehmung 6 durch Verschiebung gegen die Kraft einer Feder verlassen. Der Aufbau der Kugelraste 7 ist anhand der Figuren 3 und 4 näher beschrieben. In diesen ist die Kugelraste 7 als Einzelteil dargestellt.

Bei dem Ausführungsbeispiel nach Figur 3 besteht das Gehäuse 10 aus einer aus Blech tiefgezogenen Hülse, deren zylindrische Außenfläche 11 der Bohrung 8 des Getriebegehäuses 1 angepaßt ist. Das Gehäuse 10 besitzt einen Boden 12, der ausgehend von dem zylindrisch verlaufenden Teil der Außenfläche 11 sich zunächst radial nach außen erstreckt, so daß in diesem Bereich ein Anschlagrand 13 mit einer Doppelung des Bodens entsteht. Der Anschlagrand 13 dient zur Begrenzung der Einpreßtiefe in die Bohrung 8 des Getriebegehäuses 1 und gleichzeitig auch als Hilfsmittel für das Hintergreifen durch ein Werkzeug um die Kugelraste 7 zu demontieren.

Im Gehäuse 10 ist ein Führungsteil 14 entlang einer Achse 19, welche auch die Symmetrieachse für die Ausbildung der Bauteile bildet, verschiebbar geführt. Zur Führung ist im Ringraum zwischen der Außenfläche 15 des Führungsteils 14 und der Innenfläche 16 des Gehäuses 10 ein Käfig 17 mit beabstandet und umfangsverteilt angeordneten Wälzkörpern 18 geführt. Zur Sicherung des Führungsteils 14 gegen Auszug aus dem Gehäuse 10 ist das Gehäuse 10 zum Öffnungsende hin mit einem nach innen gerichteten Rand 20 versehen, der durch Umbördeln nach Beendigung der Montage die Teile zueinander festlegt. Ferner ist das Führungsteil 14 mit einem nach außen weisenden Kragen 22 versehen, der an den im Gehäuse 10 befindlichen Ende des Führungsteils 14 angebracht ist. Die Innenfläche des Randes 20 bildet eine Anschlagfläche 21, an welcher sich der Käfig 17 mit seiner Stirnfläche 25 anlegen kann. Der Kragen 22 besitzt dem Käfig 17 zugewandt eine Anschlagfläche 23, die an der Stirnfläche 24 des Käfigs 17 zur Anlage kommt.

Das aus dem Gehäuse 10 herausragende Ende des Führungsteiles 14 ist ebenfalls mit einem nach innen weisenden Kragen 28 versehen, dessen Innenrand 29 zur Stützung bzw. Führung der Rastkugel 9 ausgebildet ist. Der freie Durchmesser, der durch den Innenrand 29 gebildet wird, ist geringer als der Durchmesser der Rastkugel 9. Die Rastkugel 9 ist ferner in einer Kugelschale 26 abgestützt, welche ebenfalls als Tiefziehteil gestaltet ist und die mit ihrer Außenfläche 32 in der zylindrischen Bohrung des Führungsteils 14 aufgenommen ist. Die Kugelschale 26 weist eine Stirnfläche 27 auf, mit der sie sich an der Innenfläche 30 des nach innen weisenden Kragens 28 des Führungsteils 14 abstützt. Die Bemessung der Kugelschale 26 ist so gewählt, daß genügend Laufspiel für die Rastkugel 9 zwischen der Innenfläche der Kugelschale bzw. den der Reibungsverminderung dienenden und verteilt angeordneten und sich in der Innenfläche der Kugelschale abstützenden Stützkugeln 31, an denen sich die Rastkugel 9 mit ihrer Außenfläche abstützt und dem Innenrand 29 gebildet ist.

In der Bohrung des Führungsteils 10 ist ferner eine Ausschiebefeder 33 angeordnet, welche sich einerseits an der Innenfläche des Bodens 12 des Gehäuses 10 und andererseits an der Außenfläche 32 der Kugelschale 26 abstützt. Durch diese Ausbildung wird erreicht, daß die Kugelschale 26 stets in Richtung auf die Innenfläche 30 des Kragens 28 hin beaufschlagt wird, so daß es keiner besonderen Fixiermaßnahmen zwischen der Kugelschale 26 und dem Führungsteil 14 bedarf. Ferner wird erreicht, daß der Käfig 17 dann, wenn die Rastkugel 9 die gegenüberliegende Rastausnehmung verlassen hat, stets in die Ausgangsposition zurückgeführt wird, weil der Kragen 22 des Führungsteils 14 eine Mitnahme des Käfigs 17 in Richtung auf die Anschlagfläche 21 des Randes 21 des Gehäuses 10 bewirkt.

Beim Ausführungsbeispiel nach Figur 4 besteht zu dem nach Figur 3 der Unterschied lediglich darin, daß nicht der Käfig 17 zur Bewegungsbegrenzung der Ausschiebeposition des Führungsteils 14 dem Gehäuse 10 gegenüber genutzt wird, sondern das Führungsteil 14 zusätzlich an dem aus dem Gehäuse 10 herausragenden Ende, an welchem die Rastkugel 9 angebracht ist, mit einem verringerten Außendurchmesser versehen ist, so daß sich ein Absatz 34 bildet, der zur Anlage an der Anschlagfläche 21 des Randes 20 des Gehäuses 10 gelangt. Trotzdem ist weiterhin der Kragen 22 am Führungsteil 14 vorhanden. Der Abstand der Anschlagfläche 23 des Kragens 22 zur Anschlagfläche 21 des Randes 20 ist jedoch axial größer bemessen, als die Länge des Käfigs 17, so daß ein geringes Spiel zwischen den Stirnflächen 24, 25 des Käfigs 17 und den Anschlagflächen 21 und 23 gegeben ist.

Es kann zusätzlich noch eine Eindrückung 35 im Boden 12 des Gehäuses 10 vorgesehen sein, welche nach innen vorspringt und zur radialen Führung der Ausschiebefeder 33 genutzt werden kann.

### Bezugszeichenliste

- 1: Getriebegehäuse
- 2: Schaltstange
- 3: Längsachse
- 4: Schaltelement
- 5: Schaltgabel
- 6: Rastausnehmung
- 7: Kugelraste
- 8: Bohrung im Getriebegehäuse
- 9: Rastkugel
- 10: Gehäuse
- 11: Außenfläche des Gehäuses
- 12: Boden des Gehäuses
- 13: Anschlagrand
- 14: Führungsteil
- 15: Außenfläche des Führungsteils
- 16: Innenfläche des Gehäuses
- 17: Käfig
- 18: Wälzkörper
- 19: Achse
- 20: Rand des Gehäuses
- 21: Anschlagfläche des Randes
- 22: Kragen des Führungsteils
- 23: Anschlagfläche des Kragens des Führungsteils
- 24,25: Stirnfläche des Käfigs
- 26: Kugelschale
- 27: Stirnfläche der Kugelschale
- 28: nach innen weisender Kragen des Führungsteiles
- 29: Innenrand
- 30: Innenfläche des Kragens
- 31: Stützkugeln
- 32: Außenfläche der Kugelschale
- 33: Ausschiebefeder
- 34: Absatz
- 35: Eindrückung

## Patentansprüche

1. Kugelraste (7) für die Sicherung von Verstellpositionen eines axial und/oder schwenkend bewegbaren Stellelementes, insbesondere eines Gestänges (2) für Schaltgetriebe von Kraftfahrzeugen, mit einem Gehäuse (10), einem in diesem axial verschiebaren, tiefgezogenen Führungsteil (14), welchem eine Kugelschale (26) zur Führung einer Rastkugel (9) zugeordnet ist, einer Feder (33), die sich am Gehäuse (10) abstützt und das Führungsteil (14) im Ausschiebesinne beaufschlagt und mit zwischen dem Führungsteil und dem Gehäuse beweglich angeordneten und in einem Käfig (17) geführten Wälzkörpern (18),
dadurch gekennzeichnet,
daß das Führungsteil (14) als Blechhülse gestaltet ist, welche an ihrem die Rastkugel (9) aufnehmenden Ende mit einem nach innen gerichteten Kragen (28) versehen ist, dessen Öffnungsdurchmesser kleiner als der Durchmesser der Rastkugel (9) ist, daß die Kugelschale (26) in das Führungsteil (14) eingesetzt ist, daß das Gehäuse (10) ein Tiefziehteil ist, das einen Boden (12) aufweist, an dem sich die Ausschiebefeder (33) abstützt und das an seinem Öffnungsende einen nach innen umgebördelten Rand (20) als Anschlag zur Begrenzung der Ausschiebebewegung des Führungsteils (14) dem Gehäuse (10) gegenüber aufweist.

2. Kugelraste nach Anspruch 1,
dadurch gekennzeichnet,
daß das Führungsteil (14) an seinem in dem Gehäuse (10) liegenden Ende mit einem nach außen weisenden Kragen (22) zur axialen Abstützung des Käfigs (17) versehen ist.

3. Kugelrast nach Anspruch 2,
dadurch gekennzeichnet,
daß das Führungsteil (14) in der Ausschiebeposition über den Kragen (22) am Käfig (17) und über diesen am Anschlag (20) des Gehäuses (10) abgestützt ist.

4. Kugelraste nach Anspruch 1,
dadurch gekennzeichnet,
daß das Führungsteil (14) abgesetzt ist und der Absatz (34) am Anschlag (20) des Gehäuses (10) in der Ausschiebeposition anliegt.

5. Kugelraste nach Anspruch 1,
dadurch gekennzeichnet,
daß der Innenrand (29) des nach innen weisenden Kragens (28) des Führungsteils (14) der Außenfläche der Rastkugel (9) angepaßt ist.

6. Kugelraste nach Anspruch 1,
dadurch gekennzeichnet,
daß die Ausschiebefeder (33) sich an der Kugelschale (26) abstützt und diese gegen die Innenfläche (30) des nach innen weisenden Kragens (28) des Führungsteils (14) anliegt.

7. Kugelraste nach Anspruch 1,
dadurch gekennzeichnet,
daß das Gehäuse (10) im Bodenbereich, ausgehend vom zylindrischen Abschnitt zur Bildung eines radial nach außen vorstehenden Anschlagrandes (13) gedoppelt ist.

## Claims

1. Ball stop (7) for securing the shift positions of an axially and/or pivotally movable operating element, in particular of a shift linkage (2) of a motor vehicle gearbox, which ball stop (7) comprises a housing (10), a deep-drawn guide part (14) axially displaceable therein and with which a ball cup (26) for guiding a stop ball (9) is associated, a spring (33) which is supported in the housing (10) and biases the guide part (14) in the push-out direction, and rolling elements (18) displaceably mounted between the guide part and the housing and guided in a cage (17), characterized in that the guide part (14) is configured as a sheet metal bush which, at its end receiving the stop ball (9), is provided with an inwards oriented collar (28) whose opening diameter is smaller than the diameter of the stop ball (9), that the ball cup (26) is inserted into the guide part (14), that the housing (10) is a deep-drawn part having a bottom (12) on which the push-out spring (33) is supported, and the housing (10), at its open end, has a rim (20) bent over towards the inside as a stop for limiting the push-out movement of the guide part (14) relative to the housing (10).

2. Ball stop according to claim 1, characterized in that the guide part (14), at its end located within the housing (10), is provided with an outwards oriented collar (22) for the axial support of the cage (17).

3. Ball stop according to claim 2, characterized in that the guide part (14) is supported by means of the collar (22) on the cage (17) and via the cage (17) on the stop (20) of the housing (10) in the push-out position.

4. Ball stop according to claim 1, characterized in that the guide part (14) has a shouldered configuration and the shoulder (34) abuts against the stop (20) of the housing (10) in the push-out position.

5. Ball stop according to claim 1, characterized in that the inner edge (29) of the inwards oriented collar (28) of the guide part (14) is adapted in shape to the outer surface of the stop ball (9).

6. Ball stop according to claim 1, characterized in that the push-out spring (33) is supported on the ball cup (26) and this bears against the inner surface (30) of the inwards oriented collar (28) of the guide part (14).

7. Ball stop according to claim 1, characterized in that, in the region of the bottom (12), the housing (10) is doubled over starting from the cylindrical part to form a stop rim (13) projecting radially outwards.

## Revendications

1. Arrêt à bille (7) pour arrêter les positions de réglage d'un élément de réglage, en particulier de tiges (2) d'une transmission à changement de vitesse dans des véhicules automobiles, lequel arrêt à bille (7) est monté en déplacement axial et/ou en pivotement et comprend un boîtier (10), une partie emboutie de guidage (14) montée en déplacement axial dans celui-ci et à laquelle est associée une calotte sphérique (26) pour le guidage d'une bille d'arrêt (9), un ressort (33) qui prend appui sur le boîtier (10) et sollicite la partie de guidage (14) dans le sens de glissement vers l'extérieur, et des corps roulants (18) agencés mobiles entre la partie de guidage et le boîtier en étant guidés dans une cage (17), caractérisé en ce que la partie de guidage (14) est configurée sous la forme d'une douille en tôle, qui, à son extrémité qui reçoit la bille d'arêt (9), est munie d'un collet (28) orienté vers l'intérieur dont le diamètre d'ouverture est inférieur au diamètre de la bille d'arrêt (9), en ce que la calotte sphérique (26) est insérée dans la partie de guidage (14), et en ce que le boîtier (10) est réalisé par emboutissage et comprend un fond (12) sur lequel prend appui le ressort de poussée (33), le boîtier (10) comprenant à son extrémité d'ouverture, un bord (20) replié vers l'intérieur qui sert de butée pour limiter le mouvement de sortie de la partie de guidage (14) par rapport au boîtier (10).

2. Arrêt à bille selon la revendication 1, caractérisé en ce que la partie de guidage (14) comprend, à son extrémité située dans le boîtier (10), un collet (22) qui est orienté vers l'extérieur et sert d'appui axial à la cage (17).

3. Arrêt à bille selon la revendication 2, caractérisé en ce que, dans la position de sortie, la partie de guidage (14) est supportée par l'intermédiaire du collet (22), sur la cage (17), et par l'intermédiaire de cette dernière, sur la butée (20) du boîtier (10).

4. Arrêt à bille selon la revendication 1, caractérisé en ce que la partie de guidage (14) a une configuration étagée, et que, dans la position de sortie, l'épaulement (34) s'appuie contre la butée (20) du boîtier (10).

5. Arrêt à bille selon la revendication 1, caractérisé en ce que le bord interne (29) du collet (28) de la partie de guidage (14) orienté vers l'intérieur est adapté à la surface externe de la bille d'arrêt (9).

6. Arrêt à bille selon la revendication 1, caractérisé en ce que le ressort de poussée (33) prend appui sur la calotte sphérique (26) et celle-ci s'appuie contre la surface interne (30) du collet (28) de la partie de guidage (14) orienté vers l'intérieur.

7. Arrêt à bille selon la revendication 1, caractérisé en ce que le boîtier (10) est replié dans la région du fond à partir de la portion cylindrique pour former un bord de butée (13) qui fait saillie radialement vers l'extérieur.
